# EUROPEAN PATENT APPLICATION

(11) **EP 3 470 194 A1**
(43) Date of publication of application: **17.04.2019**
(21) Application number: 18275156.0
(22) Date of filing: 04.10.2018
(51) Int. Cl.: B28B 19/00, C04B 28/06

(54) **PREFABRICATED BUILDING PANELS**

(30) Priority: 13.10.2017 GB 201716856
(71) Applicant: Forterra Building Products Limited, Northampton, Northamptonshire NN4 5EA (GB)
(72) Inventor: ROGATZKI, Paul, Northampton, NN4 5EA (GB)
(74) Representative: Wilkinson, Stephen John

(57) **Abstract**

A prefabricated wall panel suitable for forming interior or exterior building walls is made by a method comprising the steps:-
(a) providing a flat bed mould box disposed horizontally;
(b) positioning individual masonry construction units within the mould box in a predetermined pattern, each masonry construction unit being out of contact with its neighbouring unit so as to provide gaps between successive masonry construction units in the mould box;
(c) pouring a fluid mortar comprising a mixture of water, a particulate rapid hardening cement comprising calcium sulfoaluminate cement, and at least one particulate bulking agent into the gaps between successive masonry construction units in the mould box and up to the level of the upper surfaces of the masonry construction units position in the mould box;
(d) allowing the fluid mortar to set and cure; and then
(e) removing the prefabricated wall panel from the mould box.

The fluid mortar used in the method exhibits a flow diameter of at least 150mm on a horizontal surface determined according to a test procedure which comprises loading freshly prepared fluid mortar into a hollow cylindrical tube having a circular cross-section, a height of greater than 50mm and an internal diameter of 50mm, up to a height of 50mm above the bottom end of the cylindrical tube, positioning the loaded tube vertically on a horizontal surface, raising the cylindrical tube containing the fluid mortar vertically above the horizontal surface so as to allow the fluid mortar to flow out of the cylindrical tube onto the horizontal surface, allowing the fluid mortar to spread on the horizontal surface until flow ceases, and measuring the diameter of the spread of mortar on the horizontal surface.

## Description

### Field of the Invention

The present invention relates to prefabricated building panels and particularly to a method of making a prefabricated wall panel suitable for forming interior or exterior building walls.

### Background to the Invention

Historically brickwork was used as a structural/loadbearing material. Masonry is strong in compression and it is for this reason that it has been so successful as a massive load resisting element when used in bridges, buildings, tunnels and other structure types. However, the introduction of the cavity wall has led to the outer leaf masonry becoming no more than an aesthetic and durable cladding required to support only its own weight. In the majority of buildings, only the inner leaf of the cavity wall is loadbearing supporting the floors and roof elements. It is commonly constructed using concrete aggregate blocks or aircrete blocks. In non-housing structures and civil engineering works the development of structural steelwork and reinforced concrete means that masonry is no longer used for the superstructure.

More recently fin and diaphragm walls have been developed which involve the use of masonry. Fin walls are fundamentally cavity walls of brick and block construction with enlarged brick piers in the outer brickwork leaf. The dimensions of the fins and the frequency of their spacing depend upon the dimensions of the overall structure. Diaphragm walls comprise a two leaf wall with the inner and outer leaves joined by cross ribs. The overall width of the wall and the frequency of the cross ribs depend upon the height of the overall structure. Both wall types are designed as propped cantilevers, the roof and roof beams providing a rigid or stiff plate forming the prop.

Reinforced brickwork is a specialized area of masonry design. Whilst a number of projects involving reinforced brickwork have proved successful, the economics of reinforced brickwork is questionable. Despite this, reinforced brickwork remains relevant for structures requiring a brick façade finish, particularly where the brickwork can be incorporated as a structural component in addition to its role as the finishing cladding.

In recent years pure masonry solutions have not been considered to be cost effective in the current economic climate. This is despite the fact that the greatest influence on modern day construction in Europe is government policy concerning carbon/energy reduction which is reflected in modern building legislation. New regulations, which seek to transition the building industry towards a desired "zero carbon" design, have influenced the design of the cavity wall mentioned earlier. In this context the thermal mass provided by masonry is considered advantageous, providing there is adequate provision for ventilation. The thermal performance of a structural unit such as a wall, roof or floor, is measured in terms of its U value which represents the heat loss in watts per metre² when the temperature (k) on one side of the structural unit is 1 degree lower than the temperature on the opposing side of the structural unit (W/m²k).

Prefabricated masonry has never been widely used in Europe or the United States of America. Prefabricated masonry as discussed herein is to be understood as reference to masonry panels having mortar filled joints constructed off-site, i.e. not constructed in-situ. Such prefabricated masonry is different to the use of composite concrete panels which comprise reinforced concrete cast onto pre-cut brick slips usually in horizontal beds.

One of the earliest known patents concerning prefabricated brickwork is GB402426. This patent describes the idea for a prefabricated cavity wall brickwork panel which was never successfully commercialized.

In GB1219587 a prefabricated brickwork panel is described constructed using a clamping technique involving a horizontal table and employing 3 holed bricks as well as a large amount of steel reinforcement. However, the brickwork panel is restricted to panel dimensions of no more than 1.0m wide x 2.4m high which greatly limits its use to specific building details. A mortar mix for use in construction of the brickwork panel described in this patent comprises a mixture of Portland cement and cement fondu with aggregate in the form of river-sand or sharp sand in the ratio 3:1 aggregate to cement.

GB1127812 also describes construction of prefabricated brickwork panels and is useful as it details some of the problems encountered in the construction of prefabricated masonry panels. According to GB1127812, the construction of the brickwork panel is automated with the brickwork panel constructed in the same orientation in which it will be subsequently installed in a building, namely vertically.

In contrast, GB1253621 describes the construction of both single leaf and cavity wall prefabricated brickwork panels in a horizontal frame. However, the brickwork panels required specially shaped bricks to accommodate reinforcement rods.

It is noted that, with the exception of GB1219587, none of the patents mentioned above provide any information on the mortar used in the construction of the brickwork panels. Also these and similar patents involve common themes in terms of requiring bricks specially shaped to accommodate extensive reinforcement and construction processes involving costly set ups.

US3965635 describes a pre-cast concrete method to form a prefabricated wall incorporating brick slips. As such, the wall incorporates significant steel reinforcement and the method results in a thicker overall construction despite the thinner brick.

Whilst the idea of prefabricated brickwork panels may have been around for a long time, a manufacturing process that is effective and not unduly costly has failed to materialize. Previous attempts at producing prefabricated brickwork panels have failed to successfully address the following commercial factors:
- The structural properties of prefabricated brickwork panels need to be superior to or at least equal to traditional built masonry.
- The appearance of prefabricated brickwork panels needs to replicate a vernacular craftsmanship rather than have the 'clinical' appearance likely to arise with automation.
- The overall cost must be competitive with traditional construction.
- Wall performance in terms of durability and resistance to rain penetration should not be dependent upon manual workmanship quality.
- Construction of the brickwork panels is required to be straightforward, easily understood and accepted by the construction team.

### Summary of the Invention

The present invention seeks to provide prefabricated building panels in the form of prefabricated masonry panels and masonry structural units which are load bearing or non-load bearing and are for use in domestic, commercial and civil construction. Furthermore, the present invention seeks to provide prefabricated masonry panels and structural units which get closer to, if not exceed, the commercial factors outlined above in comparison to prior prefabricated masonry.

The present invention therefore provides a method of making a prefabricated wall panel suitable for forming interior or exterior building walls comprising the steps:
(a) providing a flat bed mould box disposed horizontally;
(b) positioning individual masonry construction units within the mould box in a predetermined pattern, each masonry construction unit being out of contact with its neighbouring unit so as to provide gaps between successive masonry construction units in the mould box;
(c) pouring a fluid mortar comprising a mixture of water, a particulate rapid hardening cement comprising calcium sulfoaluminate cement, and at least one particulate bulking agent into the gaps between successive masonry construction units in the mould box and up to the level of the upper surfaces of the masonry construction units positioned in the mould box;
(d) allowing the fluid mortar to set and cure; and then
(e) removing the prefabricated wall panel from the mould box;
wherein the fluid mortar exhibits a flow diameter of at least 150mm on a horizontal surface determined according to a test procedure which comprises loading freshly prepared fluid mortar into a hollow cylindrical tube having a circular cross-section, a height of greater than 50mm and an internal diameter of 50mm, up to a height of 50mm above the bottom end of the cylindrical tube, positioning the loaded tube vertically on a horizontal surface, raising the cylindrical tube containing the fluid mortar vertically above the horizontal surface so as to allow the fluid mortar to flow out of the cylindrical tube onto the horizontal surface, allowing the fluid mortar to spread on the horizontal surface until flow ceases, and measuring the diameter of the spread of mortar on the horizontal surface.

Thus, the present invention provides prefabricated structural units capable of functioning as load bearing or non-load bearing structural elements conforming with the flexural and compressive strength requirements according to BS EN1052-2-2002 and with enhanced performance characteristics in comparison to in-situ built masonry. Such enhanced performance characteristics include, but are not limited to:
- The ability to manufacture prefabricated cavity structural units with fewer wall ties, since wall ties are a source of thermal bridging;
- Enhanced compressive and flexural strength;
- Prefabricated masonry structural units have enhanced air tightness as a result of consistently fully filled mortar joints;
- The single leaf masonry wall will have superior resistance to penetration by driving rain;
- Masonry panels can be produced which are consistently of a high quality and which are better engineered to a particular specification;
- Single skin prefabricated masonry panels can be used to create a double skin masonry façade;
- The use of prefabricated brickwork panels enables speedier construction at the installation site; and reduced impact on the local environment.
Using this method, the overall thickness of the wall is maintained at that of the masonry unit employed, e.g. 102mm for a standard brick.

References herein to masonry construction units is to be understood as reference to construction units which can be used to make a wall made in natural or reconstituted stone, clay brick, various forms of concrete block, aircrete block and calcium silicate bricks and their equivalents in standard or non-standard shape or size.

The fluid mortar compound is prepared by mixing water and the particulate rapid hardening cement together. The amount of water used will be sufficient to render the mortar/water mixture pourable. The fluid mortar, as used in the method of the invention, exhibits a flow diameter, as determined by the procedure described below, of at least 150mm. The procedure used to determine the flow diameter of the fluid mortar makes use of a hollow cylindrical tube having a circular cross-section, an internal diameter of 50mm and a length of 50mm or more and a horizontal flat surface. According to the test procedure, freshly prepared fluid mortar is loaded into the hollow cylindrical tube so that, when the tube is rested in a vertical orientation on the horizontal flat surface, the mortar reaches a height of 50mm above the bottom end of the tube. With the mortar loaded into the tube to the required height, and with the tube positioned in a vertical orientation on the surface, the tube is raised vertically above the surface so that the mortar flows out of the tube and spreads on the horizontal surface. The flow onto and across the surface will be such that an approximately circular spread of mortar on the surface results. When further flow of the mortar on the surface ceases, the diameter of the circular spread of mortar on the horizontal surface is measured. We have found that a flow diameter of at least 150mm indicates that the fluid mortar is sufficiently flowable such that prefabricated wall panels can be manufactured according to the method of the invention. A flow diameter less than 150mm indicates that the mortar is not sufficiently fluid that it can be poured into the gaps between the masonry construction units and flow within and fill the gaps. Preferably, the fluid mortar will have a flow diameter in the range of from 200mm to 320mm and more preferably from 250mm to 300mm. The amount of water that is required to be added to the dry solid components of the cement/bulking agent particulate mixture for the mortar to exhibit a flow diameter, according to the test procedure, of at least 150mm is typically in the range of from 1.0 to 2.5 litres per 10Kg dry solid components, preferably from 1.4 to 2.2 litres per 10Kg dry solid components.

The particulate rapid hardening cement used to prepare the fluid mortar by admixture with water comprises calcium sulfoaluminate cement. In an embodiment, the cement also comprises Portland cement. Typically, a dry cement composition used in the method of the present invention comprises from 1 to 10% of calcium sulfoaluminate and from 30 to 60% of Portland cement, where the percentages are by weight and are based on the total weight of the calcium sulfoaluminate and Portland cement.

The mortar composition comprises at least one particulate bulking agent such as a particulate aggregate material. Such particulate aggregates are commonly used in cement formulations and typical examples include silica sand, ground quartz, and similar materials. Preferably, the particle size of the particulate filler will not be greater than 5mm.

The mortar composition may contain one or more polymeric additive so as to modify the mechanical properties of the mortar.

Typically, the mortar composition contains a plasticizer. Such materials are well known in the art to improve workability of the mortar.

### Detailed Description of the Invention

The method of the invention is a flat bed manufacturing process and existing cast concrete manufacturing facilities may be easily adapted to accommodate manufacture of prefabricated masonry panels. Accordingly, in a flat bed manufacturing process, the panels are manufactured with the vertical plane or elevation of the structural unit lying in a substantially horizontal plane. Only after manufacture is the masonry panel rotated about a horizontal axis to its vertical orientation.

According to the method of the invention, a flat bed mould box is used. Suitable mould boxes may be formed of wood, metal or rigid plastics material. A box comprising a steel frame is suitable for the construction of large panels because of its strength which is essential when the frame is manoeuvred to release the finished wall panel from the mould. However, the use of timber to construct the sides of the mould box is preferred for reasons of versatility and cost. The sides of the mould box may be detachably secured together using any conventional securement, for example, bolts, to define the perimeter of the desired structural unit. The dimensions of the mould box are, of course, dependent upon the dimensions of the desired finished wall panels, for instance those having maximum heights of up to 1800mm and lengths of 1500mm or heights of 1500mm with lengths of up to 6000mm.

The mould box typically includes a lining, which may be secured to the mould box. The lining may be any material which has a surface sufficiently smooth to minimize distortion of the resultant face of the structural unit and which is capable of supporting the individual constructional units in position during fabrication of the structural unit. Preferably the lining is capable of forming with the edges of individual constructional units a barrier to leakage of mortar. A lining may include upwardly projecting ribs arranged to define the spacing between individual constructional units, such as bricks. It will, of course, be immediately apparent that the profile of the ribs may be selected to provide different types of face joints.

Once the mould box has been prepared for use, the masonry construction units are placed into the base of the mould box in the desired bonding pattern. The masonry units are typically arranged face down on the lining of the mould box, although they may, alternatively, be arranged face up. Reference herein to the face of the masonry unit is reference to that surface of the masonry unit which will be visible in the final construction.

To ensure minimal or no seepage of the mortar onto the face of the brickwork during manufacture thereby to minimize and ideally avoid surface staining, a seal or barrier between each of the joints and the mould box lining may be provided.

In one embodiment, a seal between the joints and the mould box lining involves the use of a fine particulate material which is added to the bottom of the joints after the bricks are in place. Examples of suitable particulate materials include, but are not limited to, clay dust, pulverized fuel ash, builders sand and sharp sand as well as combinations of these materials. Sand is a particularly preferred material because the sand absorbs some of the cement in the mortar creating a film or layer of weaker mortar approx. 2-3mm thick. This thin layer of weaker mortar seals against further seepage of the mortar onto the face of the brickwork.

Prefabricated masonry panels as described herein comprise masonry construction units which are bonded together using the mortar. The construction units may be any of the construction units currently used in conventional or special shaped masonry and bricklaying such as, but not limited to, clay bricks, stone, reconstituted stone, aggregate blocks (including breeze blocks) and aircrete blocks. Stone or reconstituted stone traditionally used in building construction and civil engineering projects includes, but is not limited to, granite, sandstone, limestone and marble. Aggregate blocks generally comprise aggregate material, such as crushed rock or gravel aggregates, which have been set in cement. Aircrete blocks comprise a crystalline binder called tobermorite, which is a combination of lime and silica and small quantities of quartz or other minerals such as fly ash (pulverized fuel ash). Unlike aggregate blocks, aircrete blocks are 60-85% air by volume. Aircrete blocks have relatively high compressive strength and stability despite the high proportion of pores and the absence of coarse aggregate in the constructional material.

It is essential to position the units on the base of the mould box such that a gap is left between successive units and successive layers of units. These gaps may be formed by the use of spacer elements or the liner, for example foam spacers placed between the units as they are being positioned or by the use of a preformed rubber-based template, which accommodates the mortar, which is located on the base of the mould box before the construction units are positioned.

According to an embodiment, masonry steel bed joint reinforcement may be incorporated into the bed joints to increase resistance in the formed structural unit to flexural loads. When perforated clay bricks are used as the construction units, reinforcement bars may be incorporated into the perforations at right angles to the bed joints to improve resistance in the formed structure unit to lateral loading. Reinforcement is included optionally to increase design performance primarily as resistance to lateral loading and to improve strength requirements during lateral loading and handling of the wall panels. Wall ties can be accommodated or fixed into the mould box within the dry set masonry prior to the introduction into the mould of the fluid mortar.

When the masonry construction units have been placed into the mould box in the desired pattern and with the desired inter-unit and inter-layer spacing and after positioning of any reinforcement units, the fluid pourable mortar may be poured into the spaces between the construction units after, if necessary, removing any spacer elements used to space the units during positioning in the mould box.

The mortar poured into the joints of the prefabricated wall panel used to bond the individual construction units together comprises a mixture of water, particulate rapid hardening cement comprising calcium sulfoaluminate and at least one particular bulking agent. Such mortars are characterized by their ability to give an early high strength bond. Preferably, the mortar comprises, in addition to calcium sulfoaluminate cement, one or more other cementitious materials. A settable cement typically comprises a mixture of calcium sulfoaluminate and Portland cement.

According to an embodiment, the adhesiveness of the mortar is improved by incorporating one or more than one polymer or copolymer additive. Such additives may, additionally, improve the bond strength of the mortar to the surfaces of the construction units and/or improve tensile and flexural strength and/or the resistance of the bond to water, alkali, abrasion damage or impact damage. Such polymer additives may be, for example, latexes, emulsions, redispersible polymer powders, water-soluble (co)polymers, liquid resins and monomers. Suitable polymer additives include those based on one or more ethlenically-unsaturated monomers such as dienes, vinyl esters of alkylcarboxylic acids, vinylaromatics and (meth)acrylic esters of alcohols.

The mortar contains one or more particulate bulking agents. Such bulking agents are typically particulate aggregate materials and examples include silica sand, ground limestone, chalk, marble, clay, marl, aluminium oxide, ground quartz, fly ash and combinations of these. Preferably, the particulate aggregate material has a particle size not greater than 5mm.

A high strength rapid setting cement composition comprising 1-10% calcium sulfoaluminate cement, 30-60% Portland cement, 10-30% quartz sand and <1% plasticizer mixed with water in an amount of 1.0 to 2.5L water per 10Kg dry cement composition gives a preferred fluid pourable mortar for use in the manufacture of the prefabricated panels according to the method of the invention because it has been found to achieve high strength in a short period of time. The bonds between the construction units created using this mortar have greatly superior compressive and flexural strength properties compared to ordinary Portland cement (OPC) and sand mixes used at manufacturer's recommended water content.

The fluid mortar of specified water content/flow rate is poured into the mould box in between the masonry construction units. The mortar is poured in up to the required level within the masonry so that the maximum height of filling is broadly at the level of the masonry top surface. An additional 1-5mm of residue may occur. To ensure that the mortar fully fills all of the joints, the mortar is preferably agitated by brushing (or other means) to encourage flow of the mortar into the joints. Bricks can be placed face up or face down depending on the method of pour. For face up bricks, if a panel of masonry is required to have recessed finished joints, the mortar is poured up to a desired finished level which will be below the level of the masonry top face. If a panel of masonry is required to have joints that are to be finished with a conventional pointing mortar, the adhesive mortar is poured into the panel up to the requirement level to form a deep recessed joint, for instance up to a 20mm recess. For face down bricks requiring a deeper recessed joint, a suitable bed mat may be used, or additional sand used prior to mortar pour to generate the recess.

After the mortar has been poured into the panel up to the desired depth within the spaces between the construction units, it is allowed to set and harden. The curing period will vary depending, *inter alia,* on the type of masonry construction units used, on the type of, and water content of, the mortar used and on the ambient curing conditions within the fabrication area.

After the mortar has cured, the wall panel may be removed from the mould box. Typically, the mould boxes for panel fabrication will be located directly onto a rolling conveyor table which enables easy movement of the box directly onto an electrically operated tilting table to enable removal of the finished wall panel from the mould box.

After curing is sufficiently complete (typically 24 hours), the unit can be moved from its flat bed (horizontal) position to the position or orientation of the panel when used, i.e. vertically. Thereafter the unit is preferably left for a further 24 hrs to complete setting.

### Example

Details of the manufacturing process for a single leaf prefabricated masonry test panel are set out below:
i. A mould box was constructed using softwood timber with the following internal dimensions corresponding to the Wallette perimeter: 900mm (Wallette width) x 600mm (Wallette height equivalent to 8 brick courses). The depth of the mould box was a minimum of 102mm to accommodate and support brick returns.
ii. A vacuum formed profiled template was secured using staples and a polymer based adhesive to the timber frame of the mould box as the mould box liner.
iii. Full bricks (Forterra Wilnecote extruded wirecut 3 holed format 215mm long x 103mm wide x 65mm) were placed face down in a stretcher bond format within the mould box each positioned between the ribs of the vacuum formed template.
iv. Header bricks were cut and rotated through 90° and stood on their ends on the template at each end of the brickwork.
v. With the bricks in positon, dry building sand was poured in the gaps between the bricks in the mould box up to a depth of approx. 15mm to part fill the joints between the bricks.
vi. 28Kg of a dry mortar composition were mixed with water in an amount such that the mixture was pourable displacing a flow diameter of 260mm to 300mm as measured according to the procedure hereinbefore described. The dry mortar composition comprises calcium sulfoaluminate (1-10%), Portland cement (30-60%), quartz sand (10-30%) and <1% plasticizer. The pourable mortar was poured into the spaces between the bricks in the mould box.
vii. No fixings or lifting points were included in this test panel.
viii. No bed joint reinforcement was used in this test panel.

Mortar prisms were prepared from the pourable composition described in the Example. The prisms were prepared using steel mould boxes and had the dimensions 200mm (long) x cross-section of 40mm x 40mm.
Starting from 1 day of curing time, the prisms were subjected to a series of tests to evaluate strength and strength development. The tests were conducted in accordance with BS EN1015-11: 1999 using a standard compression/flexural testing apparatus. A similar series of tests were carried out on a standard Portland cement and sand (1:3) mortar. The results are compared in Table 1 below:

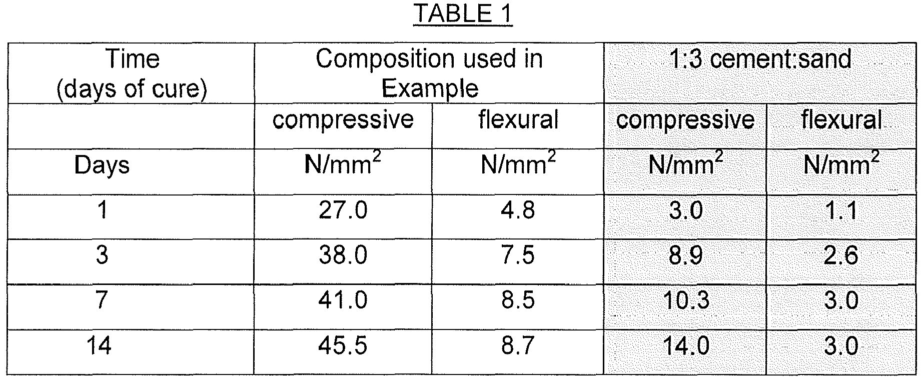

As shown in the table, the calcium sulfoaluminate cement mortar used in the Example achieved much higher strength and a more rapid strength development over the testing period compared to the standard Portland cement mortar.

## Claims

1. A method of making a prefabricated wall panel suitable for forming interior or exterior building walls comprising the steps:
(a) providing a flat bed mould box disposed horizontally;
(b) positioning individual masonry construction units within the mould box in a predetermined pattern, each masonry construction unit being out of contact with its neighbouring unit so as to provide gaps between successive masonry construction units in the mould box;
(c) pouring a fluid mortar comprising a mixture of water, a particulate rapid hardening cement comprising calcium sulfoaluminate cement, and at least one particulate bulking agent into the gaps between successive masonry construction units in the mould box and up to the level of the upper surfaces of the masonry construction units position in the mould box;
(d) allowing the fluid mortar to set and cure; and then
(e) removing the prefabricated wall panel from the mould box; wherein the fluid mortar exhibits a flow diameter of at least 150mm on a horizontal surface determined according to a test procedure which comprises loading freshly prepared fluid mortar into a hollow cylindrical tube having a circular cross-section, a height of greater than 50mm and an internal diameter of 50mm, up to a height of 50mm above the bottom end of the cylindrical tube, positioning the loaded tube vertically on a horizontal surface, raising the cylindrical tube containing the fluid mortar vertically above the horizontal surface so as to allow the fluid mortar to flow out of the cylindrical tube onto the horizontal surface, allowing the fluid mortar to spread on the horizontal surface until flow ceases, and measuring the diameter of the spread of mortar on the horizontal surface.

2. A method according to claim 1, wherein the fluid mortar comprises calcium sulfoaluminate, Portland cement and mixtures thereof.

3. A method according to either claim 1 or claim 2, wherein at least one bulking agent comprises a particulate aggregate material having a particle size not greater than 5mm.

4. A method according to any one of claims 1 to 3, wherein the fluid mortar comprises a re-dispersible polymer powder.

5. A method according to any one of claims 1 to 4, wherein the fluid mortar exhibits a flow diameter of from 200 to 320mm.

6. A method according to any one of claims 1 to 5, wherein the masonry construction units are selected from natural or reconstituted stones, clay bricks, concrete blocks, aircrete blocks and calcium silicate bricks.

7. A method according to any one of claims 1 to 6, wherein the thickness of the wall panel does not exceed the thickness of the masonry construction units by more than 5mm.

8. A method according to any one of claims 1 to 7, wherein bed joint or vertical perpend reinforcement is introduced between or within masonry construction units.

9. A method according to any one of claims 1 to 8, wherein one or more lifting and fixing sockets or wall ties are introduced between or within masonry construction units.
